# EUROPÄISCHE PATENTSCHRIFT

(11) **EP 3 748 170 B1**
(45) Veröffentlichungstag und Bekanntmachung des Hinweises auf die Patenterteilung: **06.09.2023**
(21) Anmeldenummer: 19178789.4
(22) Anmeldetag: 06.06.2019
(51) Int. Cl.: F16B 5/02

(54) **BEFESTIGUNGSSYSTEM FÜR EINE PLATTE, EINE WAND, ODER DERGLEICHEN**
FIXING SYSTEM FOR A PLATE, A WALL OR SIMILAR
SYSTÈME DE FIXATION POUR UNE PLAQUE, UN MUR OU ANALOGUES

(43) Veröffentlichungstag der Anmeldung: 09.12.2020
(73) Patentinhaber: Das ganze Leben GmbH, 39031 Bruneck (IT)
(72) Erfinder: Agostini, Georg, 39035 Welsberg (IT)
(74) Vertreter: Samson & Partner Patentanwälte mbB

(56) Entgegenhaltungen:
- DE-A1-102006 025 036
- DE-B- 1 185 866

## Beschreibung

### GEBIET DER ERFINDUNG

Die vorliegende Erfindung bezieht sich im Allgemeinen auf ein Befestigungssystem zur Befestigung einer Platte, einer Wand oder dergleichen, beispielsweise an einer anderen Platte oder einer anderen Wand oder dergleichen.

### HINTERGRUND DER ERFINDUNG/STAND DER TECHNIK

Herkömmliche Befestigungssysteme weisen einige Nachteile auf, wie z.B. eine komplizierte, mehrschrittige oder zeitaufwändige Montage, sowie die notwendige Verwendung einer ganzen Reihe zusätzlicher Hilfsmittel beim Einbau und/oder langen Montagezeiten beispielsweise aufgrund von erhöhtem Kontroll-, Prüf- und/oder Einstellaufwand.

Bei der Montage von Platten, Wänden oder von plattenförmigen Strukturen beispielsweise an Wände oder Decken kann sich bekanntermaßen kompliziert und umständlich gestalten. Soll etwa eine Platte an einer Wand befestigt werden, so ist eine Vorgehensweise, in der Platte und in der Wand Löcher anzubringen und dann beispielsweise mittels einer Schrauben-/Gewindestangen- und Dübel-Kombination eine stabile Befestigung der Platte an der Wand herbeizuführen. Diese Vorgehensweise setzt jedoch das genaue Positionieren der Löcher in der Platte und in der Wand voraus. Geringe Ungenauigkeiten in der Positionierung der Löcher können dazu führen, dass entsprechende, zusammengehörende Schrauben/Lochpaare nicht exakt übereinander liegen und somit die Schraube nicht angebracht werden kann. Solche Schrauben/Lochpaare können dann beispielsweise für die Montage der Platte nicht zur Verfügung stehen, was zur Folge haben kann, dass die Montage der Platte an der Wand instabiler wird oder ganz unmöglich werden kann.

Ein weiteres Problem kann die Ausrichtung der Platte in die gewünschte Position sein. Herkömmliche Befestigungsmethoden erlauben nur eine sehr umständliche Ausrichtung unter Zuhilfenahme von weiteren Hilfsmitteln wie beispielsweise Unterlegpatten oder Unterlegplättchen. Um die gewünschte Feinausrichtung der Platte (z.B. mittels einer Wasserwaage, d.h. horizontale und/oder vertikale Ausrichtung) zu erreichen, muss die Platte oft mehrmals an- und abgeschraubt werden, um etwa eine geeignete Kombination von Unterlegplättchen zu finden, welche die gewünschte Ausrichtung der Platte herbeiführt. Mehrmaliges An- und Abschrauben erhöht den Arbeitsaufwand, kann mit höheren Kosten beispielsweise für Handwerkerstunden verbunden sein und erhöht das Risiko, die Platte, die Wand oder anderes Arbeitsmaterial zu beschädigen.

Die Druckschrift DE 10 2006 025036 A1 beschreibt eine Befestigungsvorrichtung zum Befestigen eines oder zweier benachbarter Bauteile , insbesondere Solarzellenmodule, an einer eine T-förmige Nut aufweisenden Profilschiene, wobei eine Gewindebuchse (5), eine in diese einzuschraubende Befestigungsschraube (6) mit einem in der T-förmigen Nut (17) festzulegenden Halteabschnitt (15), und ein Halteteil (4) mit wenigstens einem am Bauteil (2) festzulegenden, seitlich vorspringenden Halteabschnitt (21) und einem Gegenlagerabschnitt für die Gewindebuchse (5), und wobei in der Montagestellung die Befestigungsschraube (6) mit ihrem Halteabschnitt (15) in der T-förmigen Nut (17) angeordnet und in die Gewindebuchse (5) eingeschraubt ist, die am Halteteil (4) gegengelagert ist, das seinerseits mit dem Halteabschnitt (21) am Bauteil (2) aufgelagert ist.

Die Druckschrift DE 11 85 866 B beschreibt eine Anordnung zur Verschraubung von Blechteilen, zwischen denen ein Abstandsstück angeordnet ist, mittels zweier miteinander in Schraubverbindung stehender Befestigungselemente, wobei zur Verschraubung von emaillierten Blechteilen das eine der Befestigungselemente (5,16) mit einem angeflachten Schaft (7) versehen und lose, jedoch unverlierbar und unverdrehbar in eine unrunde Ausstanzung (2, 3) des einen emaillierten Blechteils (1) eingesetzt und ein weiteres Teil (14) unter Zwischenlegung des Abstandsstückes (9) durch das andere Befestigungselement (15) befestigt ist.

### AUFGABENSTELLUNG

Der vorliegenden Erfindung liegt die Aufgabe zugrunde, ein gegenüber bekannten Ansätzen verbessertes Befestigungssystem bereitzustellen.

### KURZBESCHREIBUNG DER ERFINDUNG

Diese Aufgabe wird gelöst durch Gegenstände gemäß der unabhängigen Patentansprüche. Die abhängigen Ansprüche beschreiben bevorzugte Ausführungsformen.

Ein Befestigungssystem für eine Platte, eine Wand oder dergleichen, kann umfassen:
- ein Halteelement, mit wenigstens einem Durchgangsloch,
- ein Drehelement, mit wenigstens einer Bohrung, die sich entlang einer zentralen Längsachse des Drehelements erstreckt, wobei das Drehelement in das Durchgangsloch des Halteelements einsetzbar ist und
- ein Befestigungselement, welches ausgebildet ist, das Drehelement innerhalb des Haltelements zu befestigen.

Unter dem Begriff "Platte" ist nachfolgend ein im Wesentlichen flaches bzw. ebenes Element oder Bauteil von beispielsweise Einrichtungsgegenständen, Möbeln, (z.B. Küchenmöbel, wie Schränke, Regale, Schubläden, Fächer etc.), Glasplatten (z. B. für Fenster, Spiegel, Herdplatten etc.), oder auch Metallplatten wie z.B. Bleche oder dergleichen zu verstehen.

Unter dem Begriff "Platten" können nachfolgend auch Elemente oder Bauteile in einer länglicheren (z.B. vierkantigen) Form verstanden werden, wie etwa Vierkanthölzer, Balken, Träger, Bretter, Panele oder auch Stützstrukturen. Ebenfalls umfasst sind Wände, Decken und/oder Böden, Schrankwände, Regalwände, Elemente von Möbeln, Verkleidungen, Dekoplatten von Einrichtungsgegenständen und/oder im Hausbau, sowie Türen, Fenster etc.

Die Platten, Wände oder dergleichen können dabei ein oder mehr Materialien wie beispielsweise Holz, Metall, Glas, Beton, Kunststoff, Stein oder ähnliche Materialien umfassen.

Nachfolgend ist unter dem Begriff "Platte" eine wie zuvor aufgeführte und zu befestigende Platte, zu befestigende Wand oder dergleichen zu verstehen.

Zur Befestigung einer Platte, kann das erfindungsgemäße Befestigungssystem ganz oder teilweise in die zu befestigende Platte eingesetzt, eingeführt bzw. darin integriert, daran befestigt oder angebracht werden, z.B. an einer Oberfläche, oder aber (teilweise oder komplett) darin aufgenommen sein. Das Befestigungssystem umfasst vorzugsweise mehrere verschiedenen Komponenten oder Bauelemente, welche unabhängig voneinander hergestellt sein können. Das Befestigungssystem kann jedoch auch einstückig (z.B. integral oder baueinheitlich) ausgebildet sein.

Das Befestigungssystem kann beispielsweise komponentenweise durch Werkzeugmaschinen, z.B. CNC-Maschinen, wie CNC Dreh- und Fräsmaschinen oder auch konventionellen Dreh- und Fräsmaschinen, hergestellt werden. Es kann aber auch als Ganzes unter Verwendung von additiven Fertigungsverfahren, bei denen Material z.B. Schicht für Schicht aufgetragen wird, hergestellt sein. Mit anderen Worten, das Befestigungssystem kann schichtweise entlang seiner zentralen Längsachse ausgeformt bzw. ausgebildet werden, indem Material Schicht für Schicht aufgebaut wird.

Daher kann das Befestigungssystem (als Ganzes oder dessen Komponenten/Bauteile) beispielsweise auch durch ein 3D-Druckverfahren, Stereo-Lithographie-Verfahren, ein selektives Laser-Sinter-Verfahren, ein Gießverfahren oder ein Umformverfahren herstellbar sein.

Das Halteelement des Befestigungssystems kann in beliebiger Form ausgestaltet sein, solange es wenigstens ein Durchgangsloch aufweist, das sich beispielsweise entlang seiner zentralen Längsachse erstreckt. Beispielsweise kann das Halteelement in Form einer Platte, einer Scheibe oder in Form einer Buchse ausgestaltet sein, also z.B. eine im Wesentlichen zylindrische Form aufweisen.

Das Halteelement kann auch derart ausgestaltet sein, dass es in eine dafür entsprechend vorgesehene Ausnehmung, welche in der zu befestigenden Platte dafür vorgesehen sein kann, eingesetzt werden kann und damit in Wirkverbindung kommen kann.

Beispielsweise kann das Haltelement in die Ausnehmung in der zu befestigenden Platte eingesetzt, eingeführt und/oder eingedreht, damit verkeilt, verspannt, verzwickt, verhakt, verdrillt und/oder verspreizt werden, um das Befestigungssystem mit der zu befestigenden Platte zu verbinden, zu befestigen und/oder zu koppeln. Mit anderen Worten, die Form des Haltelements kann an die Form in der zu befestigenden Platte angepasst sein, damit interagieren, und wechselwirken (d.h. die Form der Ausnehmung und die Form des Haltelementes können speziell aufeinander abgestimmt gefertigt sein), um das Befestigungssystem in der zu befestigenden Platte zu halten, damit zu verbinden, zu befestigen und/oder zu koppeln.

Das Halteelement befestigt, hält, sichert und/oder fixiert demnach das Befestigungssystem innerhalb der zu befestigenden Platte, d.h. es ist fest damit verbunden. Das Halteelement kann alternativ oder zusätzlich auch unter der Verwendung von Befestigungsmitteln, wie Schrauben oder dergleichen, befestigt werden bzw. mit der Platte verbunden werden.

Vorteilhaft ist es jedoch, das Haltelement in eine dafür in der zu befestigenden Platte vorgesehenen Ausnehmung einzusetzen, einzudrehen und darin zu verkeilen, um die gewünschte Fixierung des Halteelements in der Platte zu erreichen, d.h. eine ausreichende Stabilität bereitzustellen. Auf diese Weise kann auf Befestigungsmittel wie z.B. Schrauben verzichtet werden.

Das Drehelement des Befestigungssystems kann wenigstens eine Bohrung, z.B. eine Durchgangsbohrung aufweisen, die sich entlang der zentralen Längsachse des Drehelements erstreckt. Die zentrale Längsachse des Drehelements und des Haltelements können zusammenfallen, d.h. auch gleich sein, und konzentrisch sein.

Die Bohrung des Drehelements kann mit einem Innengewinde versehen sein, sodass das Drehelement auf ein entsprechendes Gewinde schraubbar ist (z.B. von Gewindestangen, welche im Hausbau, für Einrichtungsgegenstände, Möbel und/oder bei Wandmontagearbeiten eingesetzt werden).

Das Drehelement weist einen ersten Abschnitt und einen zweiten Abschnitt auf . Der erste Abschnitt des Drehelements kann zur Wirkverbindung mit dem Befestigungselement ausgestaltet sein und der zweite Abschnitt des Drehelements kann zur Wirkverbindung mit z.B. einem Werkzeug ausgestaltet/ausgeformt sein.

Der zweite Abschnitt des Drehelements kann beispielswese ausgeformt sein, um eine Angriffsfläche (oder auch einen Angriffspunkt) bereitstellen, durch die das Drehelement in eine Drehung, z.B. eine Drehung um dessen zentrale Längsachse, versetzbar sein kann.

Der erste Abschnitt des Drehelements kann in das Durchgangsloch des Haltelements einsetzbar sein, d.h. so ausgestaltet, hergestellt oder gefertigt sein, dass er in das Durchgangsloch des Halteelements vollständig oder teilweise einsetzbar ist.

Der erste und zweite Abschnitt des Drehelements können dabei verschiedene Formen, Ausgestaltungen und Maße aufweisen. Beispielsweise kann ein Durchmesser des ersten Abschnitts des Drehelements, z.B. bei einer zylindrischen Form, kleiner sein als ein Durchmesser des Durchgangslochs des Haltelements. Die Differenz dieser Durchmesser kann einen Einfluss auf die Beweglichkeit und/oder Bewegungsfreiheit des Drehelements in dem Haltelement haben.

Mit anderen Worten, der erste Abschnitt des Drehelements und das Durchgangsloch des Haltelements können dabei einander derart durch Form und Maße angepasst sein, um ein Einsetzen des Drehelements in das Haltelement zu ermöglichen.

Erfindungsgemäß ist der erste Abschnitt des Drehelements innerhalb des Durchgangslochs des Haltelements Bewegungsfreiheit dazwischen angeordnet, bzw. derart ausgestaltet, dass diese bereitgestellt werden kann.

Mit anderen Worten, der Durchmesser des ersten Abschnitts des Drehelements kann an den Durchmesser des Durchgangslochs des Haltelements in einer solchen Weise angepasst sein, sodass, z.B. in eine bestimmte Richtung oder aber in jede beliebige Richtung (z.B. radiale Richtung von der zentralen Längsachse aus), eine Bewegungsfreiheit vorhanden ist. Demnach kann, wenn der erste Abschnitt des Drehelements in das Durchgangsloch des Haltelements eingesetzt ist, radiale Bewegungsfreiheit (d.h. radiales Spiel) zwischen Drehelement und Haltelement in eine bestimmte, mehrere oder in alle (z.B. radialen) Richtungen vorhanden sein. Das Drehelement kann also innerhalb des Haltelements drehbar, verschiebbar, versetzbar und/oder in einer anderen Weise bewegbar sein.

Die radiale Bewegungsfreiheit dient unter anderem dazu, Fehler, welche z.B. beim Bohren bzw. Positionieren von Verschraubungen (oder z.B. von Gewindestangen) in der zu befestigenden Platte, der zu befestigenden Wand oder dergleichen entstehen, ausgleichen und/oder korrigieren zu können. Auf diese Weise können beispielsweise Bohrfehler in der zu befestigenden Platte sehr leicht korrigiert und ausgeglichen werden, wodurch die Montage erleichtert und beschleunigt werden kann.

Das Befestigungselement des Befestigungssystems kann mit dem Drehelement in Wirkverbindung stehen, so dass das Drehelement beweglich, d. h. drehbar und/oder radial verschiebbar innerhalb des Durchgangsloches des Halteelements gehalten wird. Das Befestigungselement kann mit den Drehelement fest oder lösbar verbunden sein oder ein Teil des Drehelements sein, d.h. integral damit verbunden sein. In einer weiteren Ausgestaltung kann das Befestigungselement mit Hilfe von zusätzlichen Elementen mit dem Drehelement verbunden sein. Das Befestigungselement kann verschiedene Formen aufweisen die für eine Befestigung oder Fixierung des Drehelements innerhalb des Haltelements geeignet sind und ausreichende Stabilität bereitstellen. Beispielsweise kann das Befestigungselement als Klemm- oder Spreizscheibe ausgestaltet sein, welche an den ersten Abschnitt des Drehelements anbringbar ist (z.B. unter einer Vorspannung). Das Befestigungselement kann auch beispielsweise als Schweißnaht ausgestaltet sein, mit der das Drehelement innerhalb des Haltelements gesichert, fixiert und/oder befestigt werden kann.

Das erfindungsgemäße Befestigungselement kann eine mechanische Vorspannung aufweisen und in die Vertiefung des Drehelements einrasten, wodurch es das Drehelement in dem Haltelement fixiert und eine erhöhte Stabilität bereitstellt.

Das Befestigungselement muss das Drehelement innerhalb des Halteelementes mit einer hinreichenden Stabilität beweglich befestigen, so dass während der Montage der Platte z.B. an einer Wand sich das Drehelement nicht von dem Befestigungselement und aus dem Haltelement herauslösen kann. Die Stabilität kann dabei beispielsweise durch eine vorgegebene mechanische Vorspannung (z.B. eine Federspannung) des Befestigungselements und/oder durch zusätzliche Befestigungen, Sicherungen oder Halterungen erreicht werden.

Das Drehelement kann unter einer axialen (d.h. in Richtung der zentralen Längsachse des Drehelements) Bewegungsfreiheit (d.h. unter axialem Spiel) innerhalb des Haltelements angeordnet sein.

Die Bewegungsfreiheit (radial und/oder axial) kann dabei für das Haltelement bereitgestellt werden und/oder für das Drehelement. Mit anderen Worten, das Drehelement kann eine Bewegungsfreiheit bezüglich des Haltelements aufweisen, oder, je nach Betrachtungsweise, auch umgekehrt.

Die axiale und radiale Bewegungsfreiheit des Drehelementes innerhalb des Haltelementes dient dazu, Montagetoleranzen, wie beispielsweise nicht exakt gesetzte Bohrlöchern auf der zu montierenden Platte und den entsprechenden Gewindestangen an der Wand, an welche die Platte montiert werden soll, auszugleichen, ohne dass hierbei Hilfsmittel wie Unterlegplättchen verwendet werden müssen oder einzelne Montageschritte wiederholt werden müssen.

Die Kombination aus axialer Bewegungsfreiheit und radialer Bewegungsfreiheit kann somit die Montage weiter erleichtern und/oder beschleunigen.

Das Drehelement ist innerhalb des Halteelements drehbar befestigt, beispielsweise drehbar darin gehalten

Das Haltelement (sowie auch das komplette Befestigungssystem, d.h. inklusive aller Komponenten) kann im Wesentlichen vollständig in die zu befestigende Platte einsetzbar sein, oder ganz oder teilweise damit verbindbar, daran anbringbar und/oder damit/daran befestigbar sein. Das Drehelement kann ferner eine Vertiefung aufweisen, welche mit dem Befestigungselement in Wirkverbindung stehen kann. Beispielsweise kann der erste Abschnitt des Drehelements eine Vertiefung, z.B. eine (umlaufende) Nut/Aussparung aufweisen, mit der das Befestigungselement verbunden sein kann. Die Vertiefung kann sich dabei komplett um den ersten Abschnitt des Drehelements herum erstrecken oder nur teilweise, z.B. über einen oder mehr Abschnitte oder auch punktuell oder partiell.

Das Befestigungselement kann beispielsweise in die Vertiefung des Drehelements, z.B. in eine um den ersten Abschnitt umlaufende Nut/Aussparung, eingreifen und dadurch die Fixierung und/oder die Stabilität des Drehelements innerhalb des Haltelements verstärken oder erhöhen bzw. dadurch auch eine zusätzliche Sicherung bereitstellen.

Das Befestigungselement kann auch eine mechanische Vorspannung aufweisen. Beispielsweise kann das Befestigungselement gepasst gefertigt sein, wodurch ein mechanischer Wiederstand bezüglich des ersten Abschnittes des Drehelements erzeugt werden kann, welcher zusätzliche Stabilität bzw. Fixierung bereitstellt. Das Befestigungselement kann zusätzlich in die Vertiefung des Drehelements einrasten, beispielsweise nach dem Anbringen und bei Erreichen der Vertiefung (z.B. kann es in die Vertiefung "einspringen"), und/oder daran anliegen, wodurch eine erhöhte Stabilität, Fixierung, Sicherung bereitstellt werden kann.

Mit anderen Worten, die Vertiefung des Drehelements kann einen zusätzlichen Anlagepunkt bzw. eine zusätzliche Anlagefläche bereitstellen, an der das Befestigungselement anliegen/angreifen kann, um eine größere Kraft bzw. einen höheren Widerstand (z.B. gegen ein Abrutschen während der Montage) zu erzeugen, der die Stabilität bzw. die Fixierung oder die Sicherung des Befestigungssystems erhöhen kann.

Das Befestigungselement kann also in der Vertiefung des Drehelements eingreifen und darin verklemmt sein.

Wenn das Befestigungssystem (teilweise oder komplett) in die zu befestigende Platte eingesetzt ist, kann das Innengewinde des Drehelements mit einem oder mehreren für die Befestigung der Platte vorgesehenen Gewinde (wie etwa Gewindestangen, welche im Hausbau, für Einrichtungsgegenstände, Möbel und/oder bei Wandmontagearbeiten eingesetzt werden) in Eingriff kommen.

Durch eine (oder mehr) Drehungen des Drehelements um dessen eigene Achse, beispielsweise wenn ein Werkzeug an dem zweiten Abschnitt des Drehelements angreift, kann (gewindesteigungsabhängig) eine Entfernung der zu befestigenden Platte beispielsweise zu der Wand, an welcher die Platte befestigt werden soll, einstellbar sein und beliebig veränderbar sein. So kann eine Drehung des Drehelements einen Abstand der Platte zu der Wand an der sie befestigt werden soll, verkleinern oder vergrößern.

### KURZBESCHREIBUNG DER ZEICHNUNGEN

Ausführungsbeispiele der Erfindung werden nun unter Bezugnahme auf die beigefügten Zeichnungen beschrieben.
Fig. 1 zeigt eine Seitenansicht eines erfindungsgemäßen Drehelements;
Fig. 2 zeigt eine Vorderansicht eines erfindungsgemäßen Halteelements;
Fig. 3 zeigt ein erfindungsgemäßes Halteelement von einer Rückseite;
Fig. 4 zeigt eine Vorderansicht eines erfindungsgemäßen Halteelements, in das ein erfindungsgemäßes Drehelement eingesetzt ist;
Fig. 5 zeigt eine Hinteransicht eines erfindungsgemäßen Halteelements, in das ein erfindungsgemäßes Drehelement eingesetzt ist;
Fig. 6 zeigt eine Hinteransicht eines erfindungsgemäßen Befestigungssystems;
Fig. 7 zeigt eine Seitenansicht eines erfindungsgemäßen Befestigungssystems im Schnitt;
Fig. 8 zeigt eine zu befestigende Platte in der ein oder mehr erfindungsgemäße Befestigungssysteme eingesetzt sind.

### BESCHREIBUNG BEVORZUGTER AUSFÜHRUNGSFORMEN

Im Folgenden soll die Erfindung anhand von in den Zeichnungen dargestellten Ausführungsformen näher erläutert werden, wobei in sämtlichen Zeichnungen im Wesentlichen funktionsgleiche Elemente die gleichen Bezugszeichen haben.

Die nachfolgenden Figuren zeigen eine bevorzugte Ausführungsform der Erfindung, d.h. des Befestigungssystems 1. Das Befestigungssystem 1 und/oder dessen Komponenten, d.h. das Haltelement 10, das Drehelement 20 sowie das Befestigungselement 30, sind jedoch nicht auf die dargestellten Abmaße oder dargestellten Formen beschränkt, sondern können strukturell auch anders ausgestaltet sein, sodass deren erfindungsgemäße Funktion erhalten bleibt.

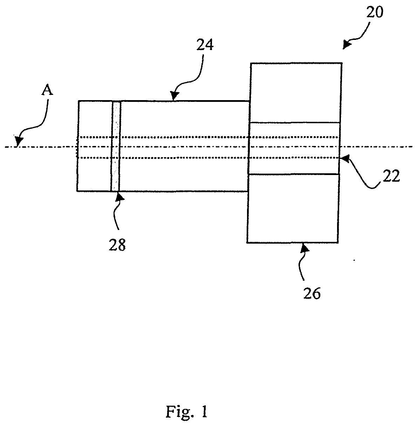

Fig. 1 zeigt ein erfindungsgemäßes Drehelement 20. Das Drehelement 20 weist wenigstens eine Bohrung 22 auf, welche sich entlang der zentralen Längsachse A des Drehelements 20 erstreckt. Die Bohrung 22 ist durch die gestrichelte Linie in Fig. 1 angedeutet. Die wenigstens eine Bohrung 22 kann mit einem Innengewinde (nicht dargestellt) versehen sein, sodass das Drehelement auf ein entsprechendes Gewinde verschraubt werden kann (beispielweise von Gewindestangen, welche z.B. im Hausbau, für Einrichtungsgegenstände, Möbel und/oder bei Wandmontagearbeiten eingesetzt werden).

Das Drehelement weist einen ersten Abschnitt 24 und einen zweiten Abschnitt 26 auf. Der erste Abschnitt 24 des Drehelements ist zur Wirkverbindung mit einem erfindungsgemäßen Befestigungselement 30 ausgestaltet und der zweite Abschnitt 26 des Drehelements 20 ist zur Wirkverbindung mit beispielsweise einem Werkzeug ausgestaltet/ausgeformt.

In Fig. 1 ist der zweite Abschnitt 26 des Drehelements in Form eines Sechskants ausgebildet, an der beispielsweise ein Schraubenschlüssel angreifen kann. Die Form ist allerdings nicht darauf beschränkt. Vielmehr kann der zweite Abschnitt 26 des Drehelements ausgeformt sein, um eine Angriffsfläche (oder einen Angriffspunkt) bereitstellen, durch die das Drehelement 20 in eine Drehung versetzt werden kann, also z.B. kann der zweite Abschnitt 26 des Drehelements 20 ausgeformt sein, um z.B. einem Schlitz- oder Kreuzschlitzschraubenzieher ermöglichen anzugreifen und das Drehelement in eine Drehung um die zentrale Längsachse A zu versetzen.

Das Drehelement 20 weist eine Vertiefung 28 auf, welche mit dem Befestigungselement 30 in Wirkverbindung oder in Eingriff kommen kann. In Fig. 1 ist die Vertiefung 28 des ersten Abschnitts 24 des Drehelements 20 als eine umlaufende Nut/Aussparung 28 ausgestaltet. Der Abstand bzw. die Platzierung dieser Nut, oder der Vertiefung allgemein (d.h. entlang des ersten Abschnitts 24 entlang der zentralen Längsachse A) hängt von den Maßen des Haltelements, des Befestigungselements, der Arte des Befestigungselements und deren Formen ab.

Die Nut 28 der Fig. 1 erstreckt sich beispielsweise komplett um den ersten Abschnitt 24 des Drehelements 20 herum, kann sich aber auch nur teilweise, z.B. über einen oder mehr Abschnitte, partiell oder punktuell erstrecken.

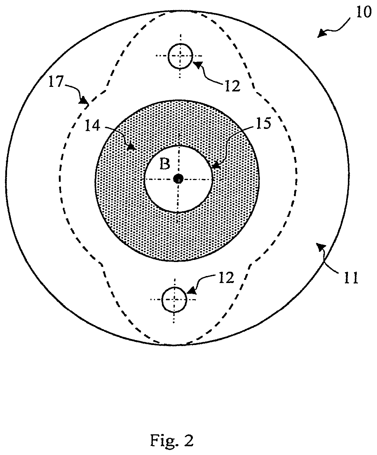

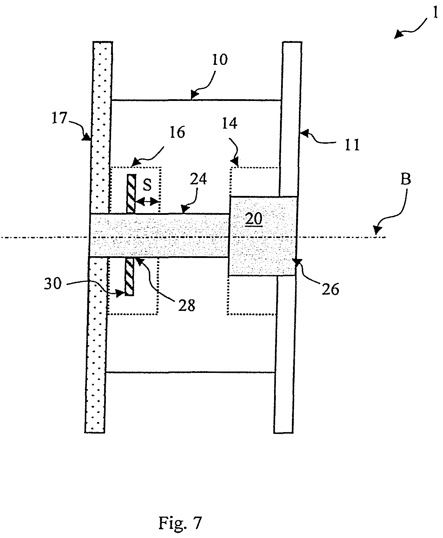

Fig. 2 ist eine Vorderansicht eines erfindungsgemäßen Haltelements 10. Das Haltelement 10 weist wenigstens ein Durchgangsloch 15 auf, welches sich entlang der zentralen Längsachse B des Haltelements 10 erstreckt. Die zentrale Längsachse B des Halteelements 10 ist ebenfalls in Figur 7 zu sehen.

Das Halteelement 10 kann an seiner Vorderseite 11 zusätzlich eine, zwei oder auch mehr Bohrungen 12 aufweisen. Diese können beispielsweise dazu dienen, das Haltelement 10 in eine zu befestigende Platte einzudrehen, zu verkeilen, einzuschrauben, oder das Halteelement 10 beispielsweise mit Schrauben an der Platte zu befestigen.

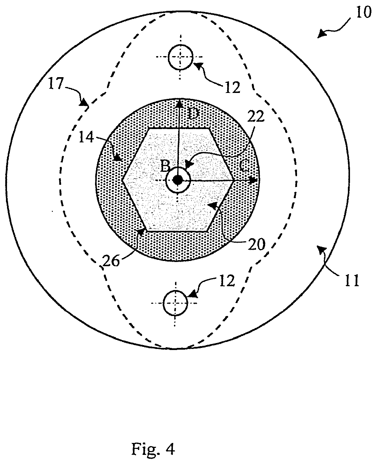

Das Haltelement 10 weist ferner an der Vorderseite 11 einen ersten Absatz 14 auf, welcher durch die grau gepunktet dargestellte Fläche angedeutet ist. Der erste Absatz 14 des Haltelements 10 ist dabei als Ausnehmung ausgestaltet und dient zur Aufnahme des zweiten Abschnitts des Drehelements 20 (siehe z.B. Fig. 4, in der das Drehelement 20 in dem Durchgangsloch 15 des Haltelements 10 eingesetzt ist).

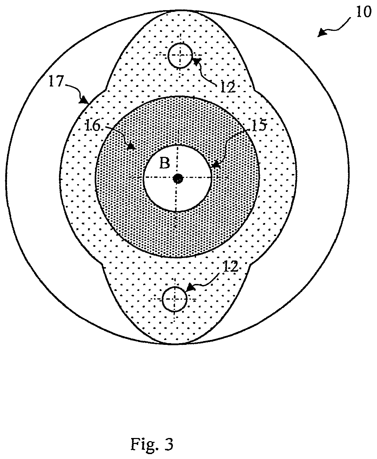

Vorzugsweise ist der erste Absatz 14 auf der Vorderseite 11 so ausgestaltet, dass er zweite Abschnitt 26 des Drehelements 20 vollständig darin eingesetzt werden kann, d.h. dieser bündig mit der Vorderseite 11 des Haltelements 10 ist. Die Form der Rückseite des Haltelements 10 ist durch die gestrichelte Linie 17 angedeutet und in Fig. 3 dargestellt.

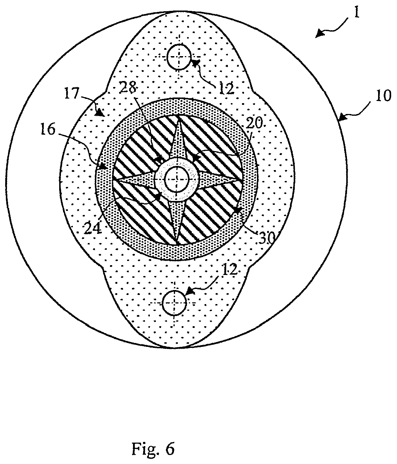

Fig. 3 zeigt eine Hinteransicht eines erfindungsgemäßen Haltelements 10. Das wenigstens eine Durchgangsloch 15 erstreckt sich dabei komplett durch das Halteelement 10. Das Haltelement 10 weist ferner an einer Rückseite 17 einen zweiten Absatz 16 auf, welcher durch die gepunktet dargestellte Fläche 16 dargestellt ist. Der zweite Absatz 16 des Haltelements 10 ist dabei als Ausnehmung ausgestaltet und dient zur Aufnahme, bzw. zur Anordnung oder Platzierung eines Befestigungsmittels darin (siehe z.B. Fig. 6, in der sich das Befestigungsmittel 30 innerhalb des zweiten Absatzes 16 des Haltelements 10 befindet). Vorzugsweise ist der zweite Absatz 16 auf der Rückseite 17 so ausgestaltet, dass das Befestigungselement 30 vollständig darin eingesetzt werden kann, d.h. dieses bündig mit der Rückseite des Haltelements 10 ist.

Die Abmessungen und/oder Formen des ersten und zweiten Absatzes 14 und 16 können dabei gleich oder unterschiedlich sein.

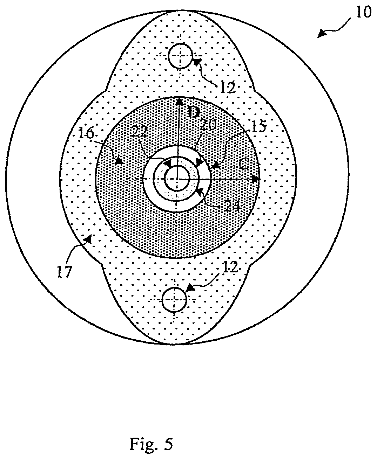

Fig. 4 zeigt eine Vorderansicht eines erfindungsgemäßen Halteelements 10, in das ein erfindungsgemäßes Drehelement 20 eingesetzt ist. Der zweite Abschnitt 26 des Drehelements 20, d.h. der beispielhafte Sechskant-Schraubenkopf, befindet sich dabei in oder innerhalb des ersten Absatzes 14 des Haltelements 10. Ferner ist die wenigstens eine Bohrung 22 des Drehelements 20 konzentrisch mit dem Durchgangsloch 15 des Haltelements 10 angeordnet, in der sich der erste Abschnitt 24 des Drehelements 20 befindet (siehe z.B. Fig. 5).

Der Durchmesser des ersten Abschnitts 24 des Drehelements ist beispielsweise etwas bzw. ausreichend kleiner als der Durchmesser des Durchgangslochs 15 des Haltelements 10 ausgestaltet, hergestellt bzw. gefertigt, sodass das Drehelement 20 innerhalb des Haltelements 10 in eine bestimmte oder aber in mehrere oder jede radiale Richtung, z.B. in eine, mehr oder jede radialen Richtungen C und D, oder Kombinationen daraus, bewegbar ist, d.h. eine Bewegungsfreiheit vorhanden ist. Demnach kann, wenn das Drehelement 20 in das Durchgangsloch 15 des Haltelements 10 eingesetzt ist, radiale Bewegungsfreiheit (d.h. radiales Spiel z.B. in Richtungen C und D) bereitgestellt werden, wodurch das Drehelement 20 innerhalb des Haltelements 10 drehbar, verschiebbar, versetzbar und/oder bewegbar ist.

Die radiale Bewegungsfreiheit dient unter anderem dazu, Fehler, welche z.B. beim Bohren bzw. Positionieren von Verschraubungen (oder z.B. von Gewindestangen) in der zu befestigenden Platte, der zu befestigenden Wand oder dergleichen entstehen, ausgleichen und/oder korrigieren zu können. Auf diese Weise können beispielsweise Bohrfehler sehr leicht korrigiert werden, wodurch die Montage erleichtert und beschleunigt werden kann.

Fig. 5 zeigt eine Hinteransicht eines erfindungsgemäßen Halteelements 10, in das ein erfindungsgemäßes Drehelement 20 eingesetzt ist. Der erste Abschnitt 24 des Drehelements 20, d.h. der beispielhafte zylindrische Schaft, befindet sich dabei in oder innerhalb des Durchgangslochs 15 des Haltelements 10. Ferner ist die wenigstens eine Bohrung des Drehelements 22 konzentrisch mit dem Durchgangsloch 15 des Haltelements 10 angeordnet.

Der zweite Absatz 16 auf der Rückseite 17 des Haltelements 10 ist vorzugsweise so ausgestaltet, dass der erste Abschnitt 24 des Drehelements 20 vollständig darin eingesetzt werden kann, d.h. dieser bündig mit der Rückseite 17 des Haltelements 10 ist.

Der Durchmesser des ersten Abschnitts 24 des Drehelements ist beispielsweise etwas bzw. ausreichend kleiner als der Durchmesser des Durchgangslochs 15 des Haltelements 10, sodass das Drehelement 20 innerhalb des Haltelements 10 eine Bewegungsfreiheit in eine bestimmte oder in mehrere oder in jede radiale Richtung aufweisen kann. Beispielsweise kann in eine der radialen Richtungen C oder D oder in Kombinationen daraus, eine Bewegungsfreiheit vorhanden sein. Demnach kann, wenn der erste Abschnitt 24 des Drehelements 20 in das Durchgangsloch 15 des Haltelements 10 eingesetzt ist, radiale Bewegungsfreiheit (d.h. radiales Spiel dazwischen) bereitgestellt werden, wodurch das Drehelement 20 innerhalb des Haltelements 10 drehbar, verschiebbar, versetzbar und/oder bewegbar ist.

Die radiale Bewegungsfreiheit des Drehelementes innerhalb des Haltelementes dient dazu, Montagetoleranzen, wie beispielsweise nicht exakt gesetzte Bohrlöchern auf der zu montierenden Platte und den entsprechenden Gewindestangen an der Wand, an welche die Platte montiert werden soll, auszugleichen, ohne dass hierbei Hilfsmittel wie Unterlegplättchen verwendet werden müssen oder einzelne Montageschritte wiederholt werden müssen.

Fig. 6 zeigt eine Hinteransicht eines erfindungsgemäßen Befestigungssystems 1, umfassend ein Haltelement 10, ein Drehelement 20 und ein Befestigungselement 30. Das Befestigungselement 30 ist durch die schraffierte Fläche angedeutet. In Fig. 6 ist demnach das Drehelement 20 in das Haltelement 10 eingesetzt und durch das Befestigungselement 30 darin fixiert, gehalten, befestigt.

Das Befestigungselement 30 steht in Wirkverbindung mit dem ersten Abschnitt 24 des Drehelements 20, d.h. mit der sich dort befindenden Vertiefung 28. Das Befestigungselement 30 wird beispielsweise unter einer Vorspannung auf den ersten Abschnitt 24 des Drehelements 20 aufgeschoben, bis es die Stelle erreicht, an der sich die Vertiefung 28, z.B. eine Nut, befindet. Aufgrund der mechanischen Vorspannung rastet das Befestigungselement 30, wenn es die Vertiefung erreicht, darin ein, wodurch es etwa gegen ein Abrutschen bei der Montage/Befestigung der Platte an beispielsweise eine Wand, gesichert wird und dadurch zusätzliche Stabilität bzw. eine zusätzliche Fixierung bereitstellt. Wie bereits erläutert kann sich die Vertiefung 28 an verschiedenen Stellen des ersten Abschnitts 24 des Drehelements 20 befinden. Alternativ kann auch überhaupt keine Vertiefung vorgesehen sein, sondern das Drehelement 20 innerhalb des Haltelements 10 auf andere Art und Weise, z.B. durch Verschweißen, befestigt werden.

Fig. 7 zeigt eine Seitenansicht eines erfindungsgemäßen Befestigungssystems 1 im Schnitt. In Fig. 7 wird der innere Aufbau des Befestigungssystems 1 veranschaulicht, wenn das Drehelement 20 in das Haltelement 10 eingesetzt ist und durch das Befestigungselement 30 befestigt, fixiert bzw. gesichert wird.

Das Halteelement 10 ist zwischen dem zweiten Abschnitt 26 des Drehelements 20 und dem Befestigungselement 30 unter einer axialen Bewegungsfreiheit (d.h. unter axialem Spiel S), also axiale Bewegungsfreiheit in Richtung der zentralen Längsachse B, angeordnet. Der Wert des axialen Spiels S kann dabei anwendungsabhängig verschieden und (herstellungsabhängig) einstellbar sein, z.B. Null sein (also kein Spiel S dazwischen vorhanden sein) oder es kann abstandsmäßig größeres bzw. kleineres Spiel vorhanden sein.

Die Bewegungsfreiheit (radial und/oder axial) wird dabei für die Kombination aus Haltelement 10, Drehelement und Befestigungselement 30, d.h. für das gesamte Befestigungssystem 1 bereitgestellt. Es kann beispielsweise aber auch nur radiale Bewegungsfreiheit oder nur radiale Bewegungsfreiheit vorhanden sein, oder aber eine Kombination daraus.

Mit anderen Worten, abhängig von der Betrachtungsweise, kann das Drehelement 20 bezüglich des Haltelements 10 axiale und/oder radiale Bewegungsfreiheit aufweisen oder das Halteelement 10 bezüglich des Drehelements 10 axiale und/oder radiale Bewegungsfreiheit aufweisen.

Die axiale Bewegungsfreiheit des Drehelementes 20 innerhalb des Haltelementes 10 dient dazu, Montagetoleranzen, wie beispielsweise nicht exakt gesetzte Bohrlöchern auf der zu montierenden Platte und den entsprechenden Gewindestangen an der Wand, an welche die Platte montiert werden soll, auszugleichen, ohne dass hierbei Hilfsmittel wie Unterlegplättchen verwendet werden müssen oder einzelne Montageschritte wiederholt werden müssen.

Die Absätze 14 und 16 können unterschiedliche oder gleiche Abmaße, Formen und Tiefen aufweisen, abhängig von der Ausgestaltung des Drehelements 20 und/oder des Befestigungselements 30.

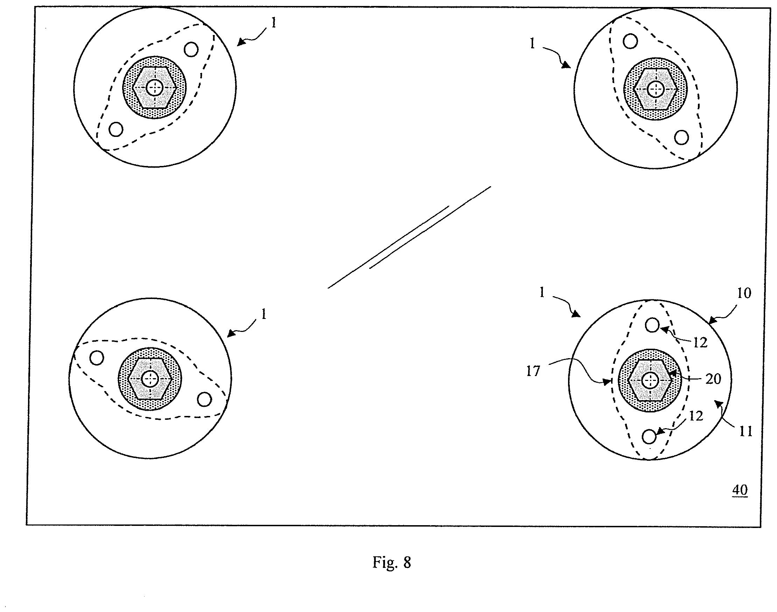

Fig. 8 zeigt eine zu befestigende Platte 40, zu befestigende Wand 40 oder dergleichen in der das erfindungsgemäße Befestigungssystem 1 eingesetzt ist. Im vorliegenden Fall sind vier erfindungsgemäße Befestigungssysteme 1 eingesetzt. Anzahl und Anordnung bzw. Positionierung in der zu befestigenden Platte 40, der zu befestigenden Wand 40 oder dergleichen hängt in jedem Fall anwendungsbezogen von mehreren Faktoren ab, wie z.B. Größe, Form, Dicke, Länge und Breite der Platte 40, Montagegebundene Faktoren sowie Befestigungsgrad, Neigung, Haltefestigkeit etc.

Die Befestigungssysteme 1 sind gemäß Fig. 8 unterschiedlich eingeschraubt dargestellt, was an der gestrichelt dargestellten Rückseite 17 des Halteelements 10 veranschaulicht ist. Die Befestigungssysteme 1 können aber in der zu befestigenden Platte 40 auch gleich eingesetzt bzw. eingedreht, eingeschraubt oder eingekeilt werden. Vorzugsweise ist die Vorderseite 11 des Haltelements 10 des Befestigungssystems 1 bündig mit der zu befestigenden Platte 40, um eine ebene Fläche bereitzustellen.

### Bezugszeichenliste

| | |
|---|---|
| Befestigungssystem | 1 |
| Zentrale Längsachse | A; B |
| Richtungen | C; D |
| Bewegungsfreiheit (Spiel) | S |
| Halteelement | 10 |
| Drehelement | 20 |
| Befestigungselement | 30 |
| Platte, Wand oder dergleichen | 40 |
| Bohrung | 12; 22 |
| Erster Abschnitt Drehelement | 24 |
| Zweiter Abschnitt Drehelement | 26 |
| Vertiefung | 28 |
| Vorderseite des Halteelements | 11 |
| Rückseite des Halteelements | 17 |
| Erster Absatz | 14 |
| Zweiter Absatz | 16 |
| Durchgangsloch | 15 |
| Zweite Seite des Halteelements | 17 |

## Patentansprüche

1. Befestigungssystem (1) für eine Platte, eine Wand oder dergleichen, umfassend:
- ein Halteelement (10), mit wenigstens einem Durchgangsloch (15),
- ein Drehelement (20), mit wenigstens einer Bohrung (22), die sich entlang einei zentralen Längsachse des Drehelements (20) erstreckt, wobei das Drehelement (20) in das Durchgangsloch (15) des Halteelements (10) einsetzbar ist; wobei das Drehelement (20) einen ersten Abschnitt (24) und einen zweiten Abschnitt (26) aufweist und
- ein Befestigungselement (30), welches ausgebildet ist, um das Drehelement (20) innerhalb des Haltelements (10) zu befestigen;
**dadurch gekennzeichnet, dass**
der erste Abschnitt (24) des Drehelements (20) innerhalb des Durchgangslochs (15) des Haltelements unter Bewegungsfreiheit in radialer Richtung dazwischen angeordnet ist, wodurch das Drehelement (20) innerhalb des Halteelements (10) in radialer Richtung verschiebbar ist.

2. Befestigungssystem (1) nach Anspruch 1, wobei das Drehelement (20) einen ersten Abschnitt (24) zur Wirkverbindung mit dem Befestigungselement (30) und einen zweiten Abschnitt (26) zur Wirkverbindung mit einem Werkzeug aufweist, wobei der erste Abschnitt (24) des Drehelements (20) in das Durchgangsloch des Haltelements (10) eingesetzt ist und, wobei die Bohrung des Drehelements (20) ein Gewinde aufweist.

3. Befestigungssystem (1) nach einem der vorstehenden Ansprüche, wobei das Halteelement (10) zwischen dem zweiten Abschnitt (26) des Drehelements (20) und dem Befestigungselement (30) unter axialer Bewegungsfreiheit dazwischen angeordnet ist.

4. Befestigungssystem (1) nach einem der vorstehenden Ansprüche, wobei das Drehelement (20) innerhalb des Haltelements (10) drehbar befestigt ist.

5. Befestigungssystem (1) nach einem der vorstehenden Ansprüche, wobei das Halteelement im Wesentlichen vollständig in die Platte, die Wand oder dergleichen einsetzbar ist oder an der Platte, der Wand oder dergleichen anbringbar ist.

6. Befestigungssystem (1) nach einem der vorstehenden Ansprüche, wobei der erste Abschnitt des Drehelements (20) ferner eine Vertiefung aufweist, mit der das Befestigungselement (30) verbunden ist.

7. Befestigungssystem (1) nach einem der vorstehenden Ansprüche, wobei das Befestigungselement in der Vertiefung des Drehelements (20) eingreift und darin verklemmt ist.

8. Befestigungssystem (1) nach einem der vorstehenden Ansprüche, wobei das Befestigungselement (30) eine mechanische Vorspannung aufweist und in die Vertiefung des Drehelements (20) einrastet, wodurch es das Drehelement (20) in dem Haltelement (10) fixiert und eine erhöhte Stabilität bereitstellt.

## Claims

1. A fixing system (1) for a plate, a wall or the like, comprising:
- a retaining member (10), having at least one through hole (15),
- a rotating member (20), having at least one bore (22), extending along a central longitudinal axis of the rotating member (20), wherein the rotating member (20) is insertable into the through hole (15) of the retaining member (10); wherein the rotating member (20) comprises a first portion (24) and a second portion (26) and
- a fastening member (30) configured to fasten the rotating member (20) within the retaining member (10);
**characterized in that**
the first portion (24) of the rotating member (20) is disposed within the through hole (15) of the retaining member with freedom of movement in radial direction therebetween, whereby the rotating member (20) is slidable in the radial direction within the retaining member (10) .

2. The fixing system (1) according to claim 1, wherein the rotating member (20) comprises a first section (24) for operative connection to the fastening member (30) and a second section (26) for operative connection to a tool, wherein the first section (24) of the rotating member (20) is inserted into the through-hole of the retaining member (10) and wherein the bore of the rotating member (20) comprises a thread.

3. The fixing system (1) according to any of the preceding claims, wherein the retaining member (10) is arranged between the second portion (26) of the rotating member (20) and the fastening member (30) with axial freedom of movement therebetween.

4. The fixing system (1) according to any one of the preceding claims, wherein the rotating member (20) is rotatably mounted within the retaining member (10).

5. The fixing system (1) according to any of the preceding claims, wherein the retaining member is substantially fully insertable into or attachable to the panel, wall or the like.

6. The fixing system (1) according to any of the preceding claims, wherein the first portion of the rotating member (20) further comprises a recess to which the fastening member (30) is connected.

7. The fixing system (1) according to any of the preceding claims, wherein the fixing member engages with the recess of the rotating member (20) and is clamped therein.

8. The fixing system (1) according to any of the preceding claims, wherein the fixing member (30) comprises a mechanical bias and latches into the recess of the rotating member (20), thereby fixing the rotating member (20) in the retaining member (10) and providing an increased stability.

## Revendications

1. Système de fixation (1) pour une plaque, un mur ou similaire, comprenant :
- un élément de retenue (10), avec au moins un trou débouchant (15),
- un élément rotatif (20), avec au moins un alésage (22), qui s'étend le long d'un axe longitudinal central de l'élément rotatif (20), dans lequel l'élément rotatif (20) peut être inséré dans le trou débouchant (15) de l'élément de retenue (10) ; dans lequel l'élément rotatif (20) présente une première partie (24) et une deuxième partie (26) et
- un élément de fixation (30), lequel est réalisé pour fixer l'élément rotatif (20) à l'intérieur de l'élément de retenue (10) ;
**caractérisé en ce que**
la première partie (24) de l'élément rotatif (20) est disposée à l'intérieur du trou débouchant (15) de l'élément de retenue avec une liberté de mouvement dans la direction radiale entre ceux-ci, moyennant quoi l'élément rotatif (20) peut être déplacé à l'intérieur de l'élément de retenue (10) dans la direction radiale.

2. Système de fixation (1) selon la revendication 1, dans lequel l'élément rotatif (20) présente une première partie (24) pour la liaison fonctionnelle à l'élément de fixation (30) et une deuxième partie (26) pour la liaison fonctionnelle à un outil, dans lequel la première partie (24) de l'élément rotatif (20) est insérée dans le trou débouchant de l'élément de retenue (10) et dans lequel l'alésage de l'élément rotatif (20) présente un filetage.

3. Système de fixation (1) selon l'une quelconque des revendications précédentes, dans lequel l'élément de retenue (10) est disposé entre la deuxième partie (26) de l'élément rotatif (20) et l'élément de fixation (30) avec une liberté de mouvement axiale entre ceux-ci.

4. Système de fixation (1) selon l'une quelconque des revendications précédentes, dans lequel l'élément rotatif (20) est fixé de manière rotative à l'intérieur de l'élément de retenue (10).

5. Système de fixation (1) selon l'une quelconque des revendications précédentes, dans lequel l'élément de retenue peut être inséré sensiblement entièrement dans la plaque, la paroi ou similaire ou peut être monté sur la plaque, la paroi ou similaire.

6. Système de fixation (1) selon l'une quelconque des revendications précédentes, dans lequel la première partie de l'élément rotatif (20) présente en outre un évidement, auquel l'élément de fixation (30) est relié.

7. Système de fixation (1) selon l'une quelconque des revendications précédentes, dans lequel l'élément de fixation s'insère dans l'évidement de l'élément rotatif (20) et est coincé dans celui-ci.

8. Système de fixation (1) selon l'une quelconque des revendications précédentes, dans lequel l'élément de fixation (30) présente une précontrainte mécanique et s'encliquète dans l'évidement de l'élément rotatif (20), moyennant quoi il fixe l'élément rotatif (20) dans l'élément de retenue (10) et fournit une stabilité accrue.
